Europäisches Patentamt

European Patent Office

Office européen des brevets

(19)

(11) Veröffentlichungsnummer: **0 001 837**
**A2**

(12) # EUROPÄISCHE PATENTANMELDUNG

(21) Anmeldenummer: **78101292.7**

(22) Anmeldetag: **02.11.78**

(51) Int. Cl.²: **C 03 C 23/00**
**C 03 C 15/00**

(30) Priorität: **02.11.77 DE 2748967**

(43) Veröffentlichungstag der Anmeldung:
**16.05.79 Patentblatt 79/10**

(84) Benannte Vertragsstaaten:
**BE CH FR GB LU NL SE**

(71) Anmelder: **Battelle-Institut e.V.**
**Am Römerhof 35**
**D-6000 Frankfurt/Main 90(DE)**

(72) Erfinder: **Gaar, Hans, Dipl.-Chem.**
**Niederhöchstädter Strasse 18**
**D-6374 Steinbach/Ts.(DE)**

(72) Erfinder: **Därr, Georg-Michael, Prof. Dr.**
**Höllsteinstrasse 58b**
**D-6380 Bad Homburg v.d.H.(DE)**

(72) Erfinder: **Tschulena, Ralf Guido, Dr.**
**Am Wickerbach 11**
**D-6238 Hofheim-Wallau(DE)**

(74) Vertreter: **Blum, Klaus-Dieter, Dipl.-Ing.**
**Am Römerhof 35**
**D-6000 Frankfurt/Main 90(DE)**

(54) Verfahren zur Entspiegelung von Gläsern sowie Vorrichtung zur Durchführung eines solchen Verfahrens.

(57) Für die Entspiegelung von Gläsern wird in der ersten Stufe auf eine Glasoberfläche im Temperaturbereich zwischen der Verarbeitungstemperatur und dem oberen Kühlpunkt ein transversales Gleichspannungsfeld angelegt. Dadurch erfolgt eine Verschiebung der Netzwerkwandler aus der behandelten Oberfläche in das Innere des Glases. Die andere, unbehandelte Oberfläche wird anschließend im Temperaturbereich zwischen der Erweichungstemperatur und dem oberen Kühlpunkt mit einem Gemisch von Schwefeldioxid und Wasserdampf behandelt. Eine Entspiegelung kann auch erzielt werden, wenn man ohne die erste Stufe beide Glasoberflächen mit Schwefeldioxid/Wasserdampf-Gemisch behandelt.

EP 0 001 837 A2

./.

A ◄─────

1    2    3    4  5    6    9    10  12    16         15
                                        13

⊖

Fig. 1

7    8    11

B ◄─────

389-35/34/77
CASCH/DOJ

25. Oktober 1978

BEZEICHNUNG GEÄNDERT
siehe Titelseite

BATTELLE - INSTITUT E.V., Frankfurt (Main)

▪▪▪▪▪▪▪▪▪▪▪▪▪▪▪▪▪▪▪▪▪▪▪▪▪▪▪▪▪▪▪▪▪▪▪▪▪▪▪▪▪

Verfahren zur Entspiegelung von Gläsern

▪▪▪▪▪▪▪▪▪▪▪▪▪▪▪▪▪▪▪▪▪▪▪▪▪▪▪▪▪▪▪▪▪▪▪▪▪▪▪▪▪

Die Erfindung betrifft ein Verfahren zur Entspiegelung von Gläsern durch selektive Ionenauslaugung bei höheren Temperaturen sowie eine Vorrichtung zur Durchführung der Ionenauslaugung. Das Verfahren eignet sich insbesondere für die Oberflächenvergütung von technischen Gläsern konventioneller Zusammensetzung mit mehr als 5 % Alkalioxid, z.B. von Flachglas aus 71 - 73 Gew.-% $SiO_2$, 0,5 - 1 Gew.-% $Al_2O_3$, 8 - 10,5 Gew.-% CaO, 1 - 3,5 Gew.-% MgO und 12,5 - 15,5 Gew.-% $Na_2O$; Hohlglas aus 64 - 67 Gew.-% $SiO_2$, 6 Gew.-% $Al_2O_3$, 13 Gew.-% CaO, 2 Gew.-%

$K_2O$, 1 Gew.-% MgO und 10 - 14 Gew.-% $Na_2O$; Bleiglas aus 35 - 65 Gew.-% $SiO_2$, 0 - 1 Gew.-% $B_2O_3$, 0 - 2 Gew.-% CaO, 6 - 15 Gew.-% $K_2O$, 5 - 8 Gew.-% $Na_2O$ und 15 - 58 Gew.-% PbO.

Die Aufhebung oder die Minderung der Reflexion von Glasoberflächen und die Verbesserung der chemischen bzw. mechanischen Beständigkeit sind von erheblicher technischer Bedeutung. Die bekannten Verfahren zur Oberflächenvergütung werden bisher aus wirtschaftlichen Gründen bevorzugt bei optischen Gläsern verwendet. Preisgünstigere, entspiegelte Flachgläser mit erhöhter Strahlungsdurchlässigkeit werden jedoch in der Zukunft in steigendem Maße, z.B. zur Abdeckung von Sonnenkollektoren, als reflexfreie Auto- und Schaufensterscheiben, Bildröhren, Bilder- und sonstige Verglasungen benötigt. Dabei wird in vielen Fällen gleichzeitig eine erhöhte Beständigkeit dieser technischen Gläser gegen Verwitterung und Auslaugung durch Wasser und Säuren gefordert.

Verfahren zur Reflexminderung mit der damit verbundenen Erhöhung der Lichtdurchlässigkeit sowie Verfahren zur Verbesserung der hydrolytischen Resistenz und Säurebeständigkeit sind bekannt. Die additiven Verfahren erreichen eine Minderung oder Auslöschung der Reflexion durch Interferenz infolge Aufbringung einer oder mehrerer dünner Schichten mit geeigneten Schichtdicken und Schicht-Brechungsindizes. Bei Aufbringung einer reflexmindernden Schicht wird gefordert, daß der Schicht-Brechungsindex bei optimaler Antireflexwirkung gleich der Wurzel aus dem Glasbrechungsindex ist und die Schichtdicke gleich ein

0001837

Viertel des optischen Weges beträgt. Diese Brechungsindexforderung kann in der Praxis jedoch nur annähernd erreicht
werden.

Die Aufbringung dünner Schichten erfolgt durch Vakuumverfahren
(S. Schiller  B. Wenzel et al., Silikattechnik, 21 (1970),
S. 40 - 44; DT-PS 1 696 110; G. Kienel, H. Walter, Res.Develop.,
24 (11), 1973, S. 49-56), durch Schichtbildung aus der Dampfphase, die sogenannten CVD-Verfahren, (B.N. Chapmann, J.C. Anderson, Science and Technologie of Surface Coating, Academic
Press, New York 1974, S. 361 - 368), sowie durch Auftragen von
Schichten durch Sprühen oder Tauchen (DT-PS 906 426; DT-PS
1 107 134; DT-PS 1 063 773).

Die Vakuumverfahren erfordern einen hohen technischen Aufwand,
ermöglichen aber auch eine gute Kontrolle der Schichteigenschaften und werden u.U. zur Veredelung wertvoller optischer
Gläser eingesetzt. Das CVD-Verfahren wird in der Hauptsache
zur Verspiegelung verwendet. Die additiven Sprüh- und Tauchverfahren lassen sich mit geringem apparativem Aufwand auch an
großflächigen Gläsern durchführen. Die Ergebnisse werden jedoch
schon von geringfügigen Texturunterschieden der Substratoberfläche beeinflußt.

Die Entspiegelung von Glasoberflächen kann auch durch subtraktive Verfahren erzielt werden, die von einer selektiven Auslaugung hochlichtbrechender Glasbestandteile, z.B. Alkalien,
Erdalkalien und Blei ausgehen. Der ausgelaug⸵ ⸵ ⸵erflä⸵⸵ ⸵⸵⸵

reich besteht in der Hauptsache aus Kieselsäure mit  - im Vergleich zum Ausgangsglas -  geringerem Brechwert. Eine weitere Verringerung des Brechwertes der ausgelaugten Oberfläche ergibt sich aus der mikroporösen Struktur der Oberflächenschicht.

Die subtraktiven Verfahren schließen ein: Die selektive Auslaugung mit wäßriger Salzlösung bei pH 7 – 9 unter Zusatz von Inhibitoren (H. Schröder, "Thin Film Formation on Glass Surfaces; Chemical Coating Processes", Scient. Techn. Comm., X. Internat. Congress on Glass, Kyoto, (1974) Nr. 8, S. 118 – 130), die Teilauslaugung durch wäßrige Fluorverbindungen, z.B. $H_2SiF_6$, (US-PS 2 490 662), das Ätzverfahren mit $SiF_4$-Dämpfen (US-PS 2 490 263), die Auslaugung von Ionen durch Elektrolyse bei Temperaturen unterhalb des Transformationsbereiches (DT-PS 844 650) und die Auslaugung von Alkalien aus der Glasoberfläche in einer Atmosphäre von Schwefeldioxid und Wasserdampf bei Temperaturen im Entspannungsbereich (V.A. Gorokhovskii, V.P. Scherbakova, Sulfure dioxide treatment as a possible means of improving window glass technology, Glass and Ceram., 27 (1970) S. 134 – 137). Das letztere Verfahren wird zur Verbesserung der mechanischen Festigkeit des Glases, jedoch nicht zu seiner Entspiegelung vorgeschlagen.

Die Teilauslaugung mit wäßriger Salzlösungen in neutralen Medien gelingt in vertretbarer Prozesszeit nur bei hydrolytisch wenig beständigen Gläsern. Allen Auslaug- und Ätzverfahren ist gemeinsam, daß mikroporöse Oberflächen entstehen, wodurch die

0001837

mechanische Festigkeit der Oberflächenschicht gegenüber dem unbehandelten Glas etwas verringert wird. Die poröse Oberfläche kann verstärkt Staub, Feuchtigkeit und Sol aufnehmen. Dadurch wird die Transparenz des Glases verringert. Der elektrolytische Ionenentzug unterhalb des Transformationsbereichs von Gläsern erfordert wegen den geringen Ionenwanderungsgeschwindigkeiten extrem lange Prozeßzeiten und bewirkt in der Hauptsache nur eine Alkaliverarmung im Oberflächenbereich.

Die Aufgabe der vorliegenden Erfindung ist die Schaffung eines Verfahrens zur Entspiegelung von Glasoberflächen, bei dem die o.g. Nachteile bekannter Verfahren vermieden werden können. Ferner soll das Verfahren in den Produktionsprozeß des Glases integrierbar sein und dadurch eine Energieeinsparung ermöglichen.

Es hat sich nun gezeigt, daß diese Aufgabe in technisch sehr fortschrittlicher Weise gelöst werden kann, indem man bei dem hier in Rede stehenden Verfahren im Temperaturbereich zwischen der Verarbeitungstemperatur und dem oberen Kühlpunkt auf eine Glasoberfläche ein transversales Gleichspannungsfeld einwirken läßt, wodurch eine Verschiebung der Netzwerkwandler aus dieser Glasoberfläche in das Innere des Glases erfolgt, und anschliessend die andere Glasoberfläche im Temperaturbereich zwischen der Erweichungstemperatur und dem oberen Kühlpunkt mit einem Gemisch von Schwefeldioxid und Wasserdampf behandelt. Die Entspiegelung kann ebenfalls erzielt werden, wenn man beide Glasoberflächen im Temperaturbereich zwischen der Erweichungstemperatur und dem oberen Kühlpunkt mit einem Gemisch von Schwefeldioxid und Wasserdampf behandelt.

Das erfindungsgemäße Verfahren wird vorzugsweise in zwei Stufen durchgeführt, wobei in der ersten Stufe die Ionenverschiebung, d.h. die "Elektrolyse", und in der zweiten Stufe die Ionenauslaugung mit dem Gemisch von Schwefeldioxid und Wasserdampf vorgenommen wird. In der zweiten Stufe werden nur aus der Glasoberfläche, welche nach der Verschiebung der Netzwerkwandler an Ionen angereichert ist, Ionen entzogen.

Die Ionenverschiebung wird zwischen der Verarbeitungstemperatur und dem oberen Kühlpunkt durchgeführt. Dieser Temperaturbereich ist von der jeweiligen Glaszusammensetzung abhängig. Das Glas besitzt bei der Verarbeitungstemperatur eine Viskosität von ca. $10^4$ Poise und bei dem oberen Kühlpunkt eine Viskosität von ca. $10^{13}$ Poise. Der Entzug von Ionen erfolgt bei Temperaturen oberhalb des Transformationspunktes der jeweiligen Glaszusammensetzung , im Temperaturbereich zwischen der Erweichungstemperatur entsprechend einer Viskosität von $10^{7,6}$ Poise und der oberen Kühltemperatur entsprechend einer Viskosität von $10^{13}$ Poise.

Im ersten Verfahrensschritt wird an das zu behandelnde Glas ein transversales Gleichspannungsfeld angelegt und zwar in der Weise, daß auf die gesamte zu behandelnde Glasoberfläche ein homogenes Gleichspannungsfeld einwirkt. Dadurch wandern insbesondere Alkali- und Erdalkali-Ionen und es entsteht nahe der behandelten Glasoberfläche eine dünne, an Alkalien und Erdalkalien verarmte Zone, die nur aus dem Silikatgerüst mit entsprechend niedrigem Brechwert besteht. Der Ionenentzug wird in den Produktionsprozeß unter Nutzung der Prozesswärme integriert. Temperatursteigerungen im "Elektrolyten" Glas führen durch Verringerung der Viskosität zur Erhöhung der elektrochemischen Beweglichkeit der Netzwerkwandler. Bei Feldstärken in der Größenordnung von einigen V/cm bis 1 kV/cm Glastemperaturen von 500 - 1000 $^{o}$C reicht z.B. zum Entzug von $Na^+$- und $Ca^{++}$-Ionen aus dem Oberflächenbereich von etwa weniger als 1 µm, eine Zeit von weniger als 1 sec. bis zu mehreren Minuten aus.

Im elektrischen Gleichspannungsfeld kann nur eine Glasoberfläche entspiegelt werden.

Das elektrische Feld kann über feste, flüssige oder gasförmige Elektroden auf das Glas aufgebracht werden. Im Floatglasprozess wird vorzugsweise das vorliegende Zinnbad als Anode verwendet, während als Gleichspannungsfeld-Übertragungsmedium z.B. die über dem Glas befindliche Gasatmosphäre dient.

Im zweiten Verfahrensschritt erfolgt der Entzug von Alkalien und Erdalkalien bei Temperaturen oberhalb des Transformationspunktes durch ein Gemisch von Luft, Wasserdampf und Schwefeldioxid. Während im Bereich bis zur Transformationstemperatur lediglich Alkalien aus der Glasoberfläche diffundieren und sich als Sulfate niederschlagen, erfolgt die Abscheidung der Erdalkalien erst bei höheren Temperaturen bei entsprechender Beweglichkeit ihrer

0001837

Ionen. Die Verarmung an Alkalien und Erdalkalien im Oberflächenbereich der Gläser führt auch hier zur Verminderung des Brechwertes und damit zur Bildung einer Antireflexschicht. Gleichzeitig erhöht sich die chemische und die mechanische Resistenz. Der Entzug ein- und zweiwertiger Kationen durch Schwefeldioxid ist im Vergleich zu den anderen bisher üblichen Methoden besonders wirtschaftlich, da er ebenfalls in den Formgebungs- und Abkühlungsprozess integriert werden kann. Dabei wird die Prozeßwärme genutzt. Das Gemisch der Reaktionsgase kann z.B. aus: 4,4 Vol.-% Luft, 95,5 Vol.-% Wasserdampf und 0,1 Vol.-% $SO_2$ bestehen.

Durch Kombination der beiden Verfahrensschritte lassen sich beide Glasoberflächen während der Herstellung veredeln.

Die nachfolgenden Ausführungen erläutern das erfindungsgemäße Verfahren am Beispiel der Floatglasherstellung und des Pittsbourgh-Verfahrens.

In den beiliegenden Abbildungen zeigen in schematischer Vereinfachung

Figur 1    den Längsschnitt durch eine Floatanlage;

Figur 2    den A-B-Schnitt im Bereich der Elektrode für die Einwirkung des Gleichspannungsfeldes;

Figur 3    den Längsschnitt einer Ziehanlage;

Figur 4    den Kreislauf des Gasgemisches für die selektive Ionenauslagung.

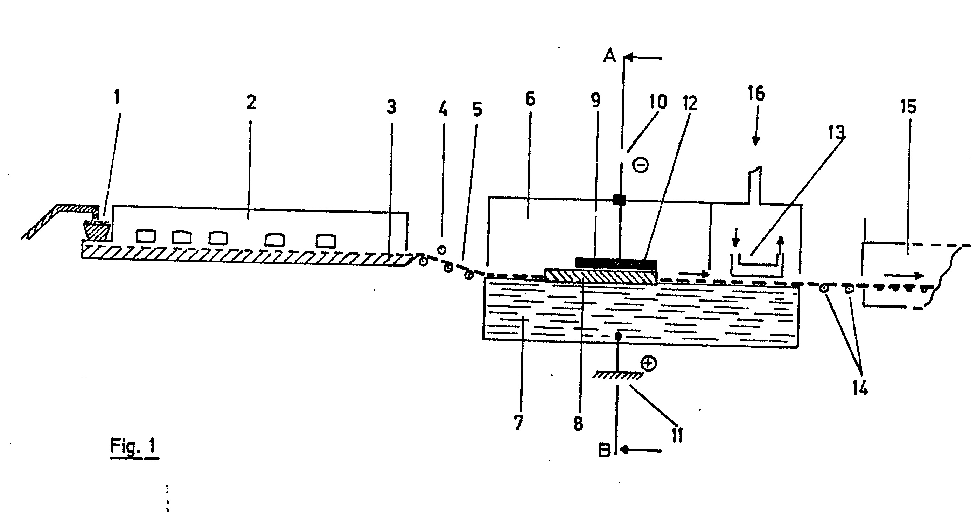

Nach Figur 1 wird das Gemenge der üblichen Zusammensetzung in den Speiser 1 der Schmelzwanne 2 eingegeben. Das geschmolzene und geläuterte Glas 3 gelangt über die Transportrollen 4 in Form eines Bandes 5 in die Floatanlage 6. Das Glas schwimmt auf dem Zinnbad 7. Die Breite des Glasbandes wird durch zwei Schienen 8 seitlich begrenzt. Eine Hochspannungsgleichstromquelle 10 wird mit dem positiven Pol über die Erdung 11 und das Zinnbad 7 mit der Unterseite des ca. 1000 $^{o}$C heißen Glasbandes verbunden. Der negative Pol wird isoliert durch die Decke der Floatanlage 6 an die Elektrode 12 geführt. Das elektrische Potential in der Größenordnung von 1 kV wird berührungslos von der Elektrode 12 über einen Spalt von einigen mm Dicke auf das vorbeifließende Glasband übertragen. Im Bereich der Elektrode 12 erfolgt die Diffusion der ein- und zweiwertigen Kationen transversal ausgehend von der auf dem Zinnbad 7 aufliegenden unteren Oberfläche des noch schmelzflüssigen Glasbandes 5 in Richtung der entgegengesetzten freien Oberfläche. Durch diesen Verfahrensschritt wird die einseitige Entspiegelung bei gleichzeitiger, ebenfalls einseitiger Verbesserung der chemischen bzw. mechanischen Oberflächenresistenz, erzielt.

Anschließend an die Elektrolyse werden der unbehandelten freien Glasoberfläche Kationen entzogen. Hierfür kann in der Floatanlage ein einseitiger Düsenkasten 13 vorgesehen werden, durch den das Reaktionsgas ausströmt.

Nach Verlassen des elektrischen Feldes erniedrigt sich die Temperatur des Glases verfahrensbedingt auf ca. 600 °C. Durch die Zuführung 16 wird die Floatanlage mit reduzierender Gasatmosphäre versorgt. Das formstabile Band gelangt nun in herkömmlicher Weise über Transportrollen 14 in die Kühlbahn 15.

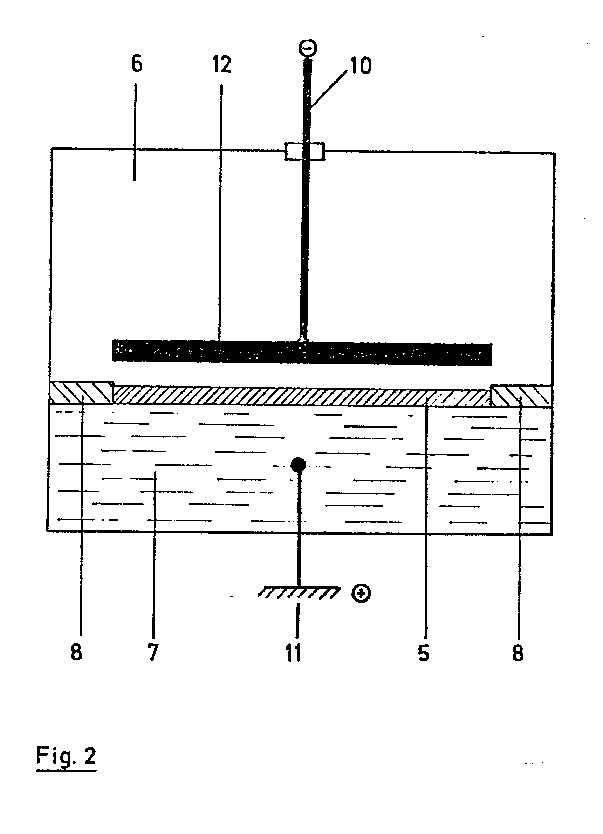

In Figur 2 wird im Querschnitt nochmals dargestellt, daß das auf dem Zinnbad 7 liegende Glasband 5 seitlich durch zwei Schienen 8 begrenzt wird und zwischen der Elektrode 12 und dem Band 5 ein Abstand von einigen mm Dicke vorhanden ist.

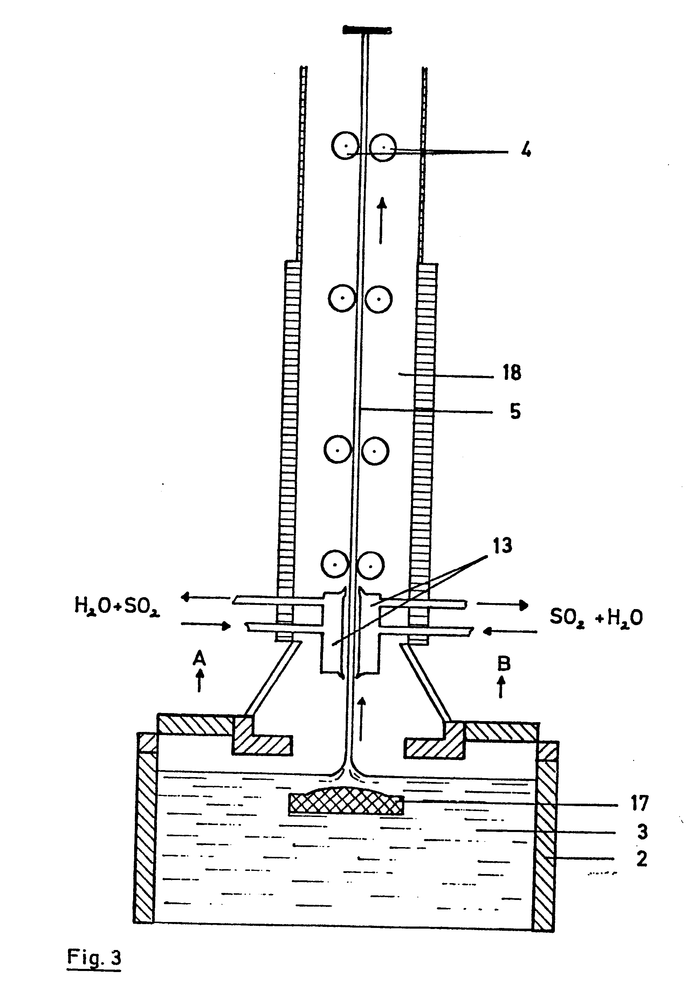

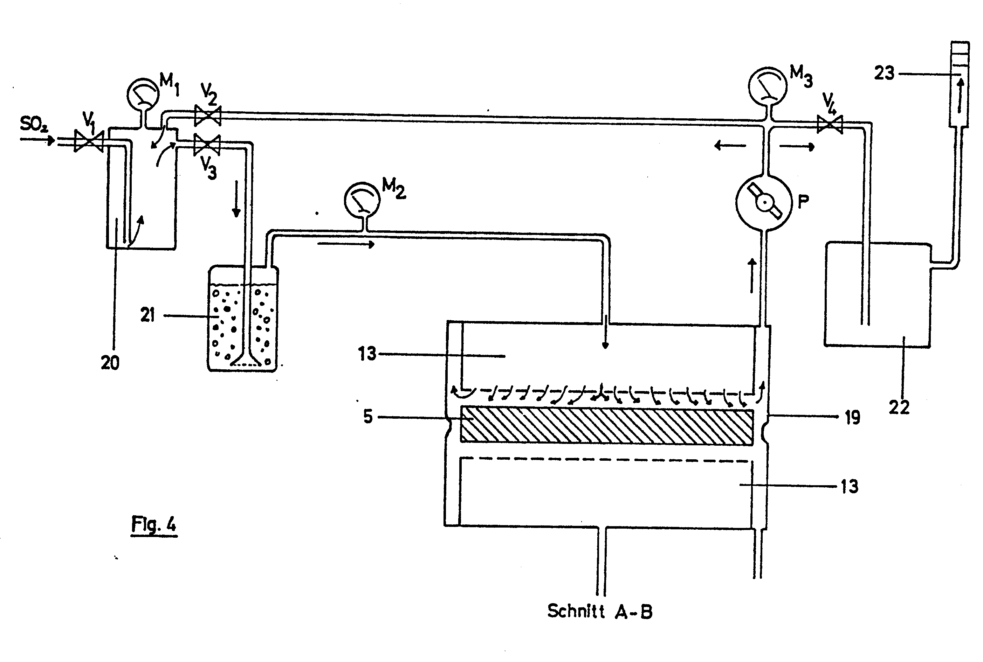

In den beiliegenden Figuren 3 und 4 wird am Beispiel einer Flachglasziehanlage nach dem Pittsbourgh-Verfahren die selektive Kationenauslaugung näher erläutert.

Nach Figur 3 wird die Schmelze 3 im Becken 2 nach herkömmlichen Verfahren über einen Körper aus feuerfestem Material 17 im Ziehschacht 18 durch Rollen 4 in die Höhe gezogen. Das Glasband 5 bewegt sich mit einer Ziehgeschwindigkeit von z.B. 100 m/h für Glas mit 1,9 mm Dicke und einer Oberflächentemperatur zwischen 850 und 600 °C an den beidseitigen Düsenkästen 13 vorbei. Es kann auch nur ein Düsenkasten verwendet werden, falls die Oberfläche des Glasbandes einseitig behandelt werden soll.

In Figur 4 geht hervor, daß das Schwefeldioxid über das Ventil V1 und V3 dem Sammelbehälter 20 und dem Reaktionsbehälter 21 zugeführt wird, in dem die Beladung des Schwefeldioxids mit Wasser folgt. Das gasförmige Reaktionsgemisch gelangt mit einem geringen Überdruck von z.B. 1,5 bar in die Düsenkästen 13 und wird von dort mit geringem Unterdruck von z.B. 0,8 bar über die Pumpe P abgesaugt. Die Düsenöffnungen der Kästen 13 sind der Oberfläche des zu behandelnden Glasbandes 5 zugewandt. Um die Verdünnung des Reaktionsgases mit Außenluft gering zu halten, besitzen die Düsenkästen 13 eine Ummantelung 19 in der Breite des Glasbandes 5. Das abgesaugte Gasgemisch wird erneut in den Sammelbehälter 20 zurückgeführt. Um die erforderliche Konzentration des Reaktionsgases aufrechtzuerhalten kann aus dem Gaskreislauf durch Veränderung an der Ventilstellung von V2 und V4 ein Teilstrom im Reaktionsgefäß 22 unschädlich gemacht werden, z.B. durch Überführung in Natriumsulfat. Spuren von Restgasen und Wasserdampf werden mit den Abgasen der Wanne durch den vorhandenen Schornstein 23 abgeleitet. Nach Abspülen des Reaktionsbelages von Natrium- und Calciumsulfat, vom thermisch entspannten, kalten Glas ist der Veredlungsprozeß beendet.

0001837

389-35/34/77
CASCH/DOJ

25. Oktober 1978

Patentansprüche

1. Verfahren zur Entspiegelung von Gläsern durch selektive Ionenauslaugung bei höheren Temperaturen, dadurch gekenn-zeichnet, daß man im Temperaturbereich zwischen der Verarbeitungstemperatur und dem oberen Kühlpunkt auf eine Glasoberfläche ein transversales Gleichspannungsfeld einwirken läßt, wodurch eine Verschiebung der Netzwerkwandler aus dieser Glasoberfläche in das Innere des Glases erfolgt, und anschließend die andere Glasoberfläche im Temperaturbereich zwischen der Erweichungstemperatur und dem oberen Kühlpunkt mit einem Gemisch von Schwefeldioxid und Wasserdampf behandelt.

2. Verfahren zur Entspiegelung von Gläsern durch selektive Ionenauslaugung bei höheren Temperaturen, dadurch gekenn-zeichnet, daß man beide Glasoberflächen im Temperaturbereich zwischen der Erweichungstemperatur und dem oberen Kühlpunkt mit einem Gemisch von Schwefeldioxid und Wasser-dampf behandelt.

3. Verfahren nach Anspruch 1, dadurch gekennzeichnet, daß das transversale elektrische Feld über feste, flüssige oder gasförmige Elektroden auf das Glas aufgebracht wird.

4. Verfahren nach Anspruch 1, <u>dadurch gekennzeichnet</u>, daß im Floatgasprozeß das Zinnbad als Anode dient.

5. Vorrichtung zur Durchführung des Verfahrens nach Anspruch 1 oder 2, <u>dadurch gekennzeichnet</u>, daß sie für die selektive Ionenauslaugung in einem Gaskreislauf eine oder mehrere Düsenkästen (13) aufweist, deren Düsenöffnungen auf die Glasoberfläche (5) gerichtet sind, und daß ein Gassammelbehälter (20) und ein Reaktionsbehälter (21), in denen die Herstellung des Schwefeldioxid/Wasserdampf-Gemisches erfolgt, sowie ein Reaktionsgefäß (22) zur Überführung der abgezogenen schwefligen Säure in Sulfate vorgesehen sind.

- ¼ -

Fig. 1

0001837

Schnitt A-B

Fig. 2

0001837

$H_2O + SO_2$       $SO_2 + H_2O$

A      B

4

18

5

13

17

3

2

Fig. 3

SO₂

M₁  V₂

V₁

V₃

M₃  V₄

23

M₂

P

21

20

13

5

19

13

22

Fig. 4

Schnitt A-B

- 4/4 -

0001837